# EUROPÄISCHE PATENTSCHRIFT

(11) **EP 3 337 316 B1**
(45) Veröffentlichungstag und Bekanntmachung des Hinweises auf die Patenterteilung: **06.11.2019**
(21) Anmeldenummer: 16774851.6
(22) Anmeldetag: 18.08.2016
(51) Int. Cl.: A01L 1/00

(54) **MASS-HUFEISEN MIT INTEGRIERTER LEICHTBAUSTRUKTUR UND GENERATIVES FERTIGUNGSVERFAHREN DAFÜR**
CUSTOM SIZE HORSE SHOE HAVING INTEGRATED LIGHT-WEIGHT STRUCTURE AND GENERATIVE PRODUCTION METHOD THEREFOR
FER À CHEVAL À STRUCTURE LÉGÈRE INTÉGRÉE ET PROCÉDÉ DE FABRICATION GÉNÉRATIF CORRESPONDANT

(30) Priorität: 18.08.2015 DE 102015010607
(43) Veröffentlichungstag der Anmeldung: 27.06.2018
(73) Patentinhaber: Rosswag GmbH, 76327 Pfinztal (DE)
(72) Erfinder: DONISI, Sven, 76327 Pfinztal (DE); GRAF, Gregor, 76327 Pfinztal (DE)
(74) Vertreter: Mehl-Mikus, Claudia
(86) Internationale Anmeldenummer: PCT/EP2016/001407
(87) Internationale Veröffentlichungsnummer: WO 2017/028957

(56) Entgegenhaltungen:
- WO-A1-92/03770
- WO-A1-2013/067285
- DE-A1- 2 308 228
- US-A1- 2014 262 353

## Beschreibung

Die Erfindung betrifft ein Maß-Hufeisen mit integrierter Leichtbaustruktur und ein generatives Fertigungsverfahren hierfür.

Hufeisen für Reitpferde können, je nach Größe des Pferdes und Art der Belastung, der das Pferd ausgesetzt wird, ein ganz erhebliches Gewicht aufweisen. Beim Bewegungsablauf des Pferdebeines an sich, insbesondere aber im Rennsport, ist dabei jedes Zuviel an Gewicht nachteilig. So wird beispielsweise der Hufrolle-Apparat bei schweren oder nichtmaßgeschneiderten Hufeisen unnötig belastet und die Sehnen und Bänder müssen mehr leisten, je schwerer der Huf mit Eisen ist. Gewichtsoptimierte und vorzugsweise auch ideal passende, maßgeschneiderte Hufeisen sind daher seit längerem im Fokus der Huftechnik.

Aus dem Stand der Technik sind bereits gewichtsoptimierte Hufeisen bekannt. Die FR 2973 644 A1 beschreibt dazu ein Hufeisen, das aus drei Lagen besteht. Die untere Lage ist abriebsfest und weist gute Reibungseigenschaften auf, die die Haftung auf dem Untergrund verbessern sollen; die mittlere Lage kann aus einem Verbundmaterial bestehen und ist dazu vorgesehen, Steifigkeit bereitzustellen, und eine oberen Lage kontaktiert den Huf und ist verformbar.

Ferner wird die Gestaltung leichter Hufeisen auch in der DE 40 27 057 A1 adressiert. Dort wird ein Verfahren zur Herstellung eines Hufbeschlags beschrieben, bei dem die individuellen Hufabmessungen direkt am Huf abgegriffen werden und das Hufeisen durch eine Werkzeugmaschine (z. B. Fräsmaschine, aber auch Laser- und Wasserstrahlschneiden) auf Basis der Daten der Hufvermessung aus einem Vollmaterial heraus gearbeitet wird. Für Rennanwendungen wird die Herstellung aus einem Leichtmetall, bevorzugt einer hochfesten Aluminiumlegierung, genannt und eine Anwendung von Kunststoff zur Unterstützung der Heilung nach Verletzung des Hufapparats vorgeschlagen.

Die Firma CSIRO, Australien (http://www.csiro.au/en/News/News-releases/2013/3D-printed-horseshoe-to-improve-racing-performance) schließlich hat leichte, maßgeschneiderte Hufeisen aus Titan offenbart, die mittels 3D-Druck gefertigt werden. Die mittels 3D-Scans vom Huf erfassten Daten werden im generativen Fertigungsverfahren in ein VollMaterial-Titanhufeisen umgesetzt.

Die US 2014/0262353 A1 beschreibt ein generativ gefertigtes Maß-Hufeisen aus einem Metallwerkstoff mit einer Mehrzahl Durchtrittslöcher für Hufnägel. Dieses Dokument offenbart ebenfalls ein Generatives Fertigungsverfahren für Maß-Hufeisen aus einem Metallwerkstoff mit einer Mehrzahl Durchtrittslöcher für Hufnägel.

Ausgehend von diesem Stand der Technik ist es Aufgabe der vorliegenden Erfindung, ein verbessertes leichtgewichtiges, maßgeschneidertes Hufeisen bereitzustellen.

Diese Aufgabe wird durch ein Maß-Hufeisen mit den Merkmalen des Anspruchs 1 gelöst.

Die weitere Aufgabe, ein Fertigungsverfahren zur Fertigung maßgeschneiderter, leichtgewichtiger Hufeisen zu schaffen, wird durch das Verfahren mit den Merkmalen des unabhängigen Anspruchs 8 gelöst.

Bevorzugte Ausführungsformen des erfindungsgemäßen Gegenstandes und des Verfahrens sind in den Unteransprüchen ausgeführt.

Eine erste Ausführungsform eines erfindungsgemäßen generativ gefertigten Maß-Hufeisens, das aus einem Metallwerkstoff besteht und mehrere Durchtrittslöcher für Hufnägel aufweist, sieht erfindungsgemäß eine Leichtbaustruktur im Inneren des Maß-Hufeisens vor; also integrierte Leichtbaustrukturen. Durch diese Leichtbaustruktur wird erreicht, dass bei Beibehalt der Steifigkeit und der Stabilität eine Gewichtsreduktion des Hufeisens erreicht wird, was vorteilhaft beispielsweise bei Rennpferden schon große Geschwindigkeitsvorteile des Pferdes erwirken kann, da die Trägheit des Hufs im Galopp verringert wird. Auch orthopädische Hufeisen sind denkbar, die eventuelle Fehlstellungen beim Pferd ausgleichen und Heilungsprozesse beschleunigen bzw. durch die Leichtbaustrukturen, die dämpfend wirken, etwa Gelenkverschleiß reduzieren können.

Maß-Hufeisen meint im Übrigen hierin ein geometrie-individuell gefertigtes Hufeisen.

Die Leichtbaustruktur kann eine oder mehrere Kammer(n) umfassen, die sich im Körper des Hufeisens erstrecken. Die Größe und Form der Kammern wird dabei so gewählt, dass das Gewicht des Hufeisens bei der erforderlichen Steifigkeit und Stabilität bestmöglich reduziert wird.

Um die Kammer(n) zu stabilisieren, können Stege oder Rippen oder Wandungen in den Kammern vorliegen, als besonders günstig in Bezug auf Trittdämpfung und Stabilität werden aber dreidimensionale Struktur(en) wie etwa waben- oder netzartige Struktur(en) vorgeschlagen, die in den Kammern oder der Kammer angeordnet werden.

Bei der generativen Maß-Hufeisenfertigung aus Metallpulver kann nicht-aufgeschmolzenes Material in den Kammern verbleiben. Je nach Anwendung des Hufeisens und gewünschten Eigenschaften kann vorgesehen sein, dass die Kammern Öffnungen aufweisen können, durch die das überschüssige Pulver des Metallwerkstoffs entfernt werden kann; etwa durch Ausspülen mittels Druckluft oder Wasser. Dafür ist erforderlich, dass eine solche Kammer wenigstens zwei der Öffnungen hat; eine Einlass- und eine Auslassöffnung für das Reinigungsfluid.

Es ist aber auch möglich, dass in einer Kammer sowohl die dreidimensionale Struktur(en) wie etwa waben- oder netzartige Struktur(en) vorgesehen ist/sind, als auch die Pulverfüllung.

Wenn es für die Anwendung des Eisens, bedingt bspw. durch Einsatz und Gesundheit des Pferdes, als sinnvoll erachtet wird, kann eine solche Kammer auch als geschlossene Leichtbaustruktur gefertigt werden und eine Pulverfüllung des Metallwerkstoffpulvers enthalten, um so sehr gute Dämpfungseigenschaften bereitzustellen, die sich durch die Reibung der Metallpartikel aneinander in der Kammer ergeben.

Durch den Einsatz eines generativen Herstellungsverfahrens können ohne weiteres weitere Funktionen des Maß-Hufeisens in einem einzigen Fertigungsprozess passgenau geschaffen werden. Als generatives Herstellungsverfahren können zur Fertigung eines solchen Maß-Hufeisen bevorzugt selektives Laserschmelzen, selektives Lasersintern, Elektronenstrahlschmelzen oder das Pulverauftragsschweißen verwendet werden.

So kann das Maß-Hufeisen eine Zehenkappe oder Seitenkappen aufweisen - solche Kappen dienen als Anschlag beim Beschlagen und einem verbesserten Abrollverhalten des Hufs.

Weiter kann das Maß-Hufeisen
- an seiner Oberseite, die am Huf anliegt, wenn das Pferd damit beschlagen ist, rutschhemmende Strukturen, bevorzugt Riefenstrukturen, besonders bevorzugt pfeilspitzenförmige Riefenstrukturen aufweisen,
- an seiner Unterseite Griffigkeit verbessernde Strukturen, bevorzugt Riefenstrukturen, besonders bevorzugt pfeilförmige Riefenstrukturen aufweisen, oder auch Stollen oder Stifte, die den Widiastiften entsprechen,
- oder entlang einer Linie, auf der die Durchtrittslöcher für Hufnägel verlaufen, einen durchgängigen oder alternativ einen unterbrochenen Falz zur Aufnahme der Hufnagelköpfe aufweisen. Der Falz kann breiter sein als Falze konventioneller Hufeisen, um weiter Gewicht einzusparen. Er kann auch an dem Punkt, an dem das Pferd über die Zehen abrollt, zur verbesserten Kraftübertragung verbreitert sein.

Alternativ kann das Maß-Hufeisen auch an der Stelle, die im beschlagenen Zustand unter den Zehen liegt, eine Ausnehmung aufweisen, in die ein Stahl- oder Titaneinsatz eingesetzt werden kann, der im Übrigen auch auswechselbar ist.

Das Maß-Hufeisen kann bevorzugt aus Aluminium, Stahl oder Titan bestehen, wobei auch andere Metalle und Legierungen möglich sind.

Es wird erfindungsgemäß mit einem generativen Fertigungsverfahren für Maß-Hufeisen eben aus einem Metallwerkstoff wie Aluminium, Stahl oder Titan, oder gegebenenfalls einem anderen geeigneten Werkstoff, in Pulverform gefertigt und hat für den Beschlag mehrere Durchtrittslöcher für Hufnägel.

Das Verfahren umfasst in einer ersten Ausführungsform die Schritte
- Ausführen eines 3D-Scans und Erfassen der 3D-Scan-Daten der Geometrie des Hufes und Speichern der aufgenommenen 3D-Scan-Daten,
- Zuführen der 3D-Scan-Daten und Zuführen von Ergänzungsstruktur-Daten einer CAD-Software zum Erzeugen von Schichtdaten des Maß-Hufeisens aus den 3D-Scan-Daten, und den Ergänzungsstrukturdaten, dann
- Zuführen der Schichtdaten einer zum generativen Fertigen von Metallbauteilen geeigneten Fertigungsvorrichtung, und
- Bereitstellen eines Metallpulvers, und
- schichtweise Fertigen des Maß-Hufeisens.

Da die generative Fertigung mit Hilfe des SLM-Verfahrens eine schnelle Fertigung innerhalb eines Werktags erlaubt, kann das benötigte Zeitfenster zwischen 3D-Scan und Beschlagen eingehalten werden, bevor sich die Form des Hufs wieder verändert. Da das Maß-Hufeisen schon auf den Pferdehuf angepasst ist, sind im Idealfall keine Anpassungsprozesse durch einen Hufschmied mehr notwendig.

Als eine Hauptanwendung der erfindungsgemäßen Hufeisen wird der Beschlag von Rennpferden vorgeschlagen, da im Pferderennsport durch die Leichtbau- und Dämpfungswirkung in Verbindung mit der individuellen Passform enorme Vorteile liegen.

Um die Geometrie des Hufes indirekt erfassen zu können, ist es günstig, vor dem Ausführen des 3D-Scans und dem Erfassen der Geometrie des Hufes einen Hufabdruck in ein Abbildungsmaterial aufzunehmen. Bei dem Abbildungsmaterial kann es sich um einen Trittschaum handeln. Der 3D-Scan wird dann an dem Hufabdruck vorgenommen, der in dem Abbildungsmaterial vorliegt.

Die Maßfertigung der erfindungsgemäßen Hufeisen erlaubt somit auf einfache und sehr schnelle Weise, die Geometrie der Hufe des Pferdes alle einzeln zu erfassen, sodass maximale Individualität beim Beschlag jedes einzelnen Hufes gegeben ist und dieser hochpräzise beschuht werden kann.

Besonders geeignet ist als generatives Fertigungsverfahren das selektive Laserschmelzen (SLM); entsprechend ist die Fertigungsvorrichtung eine Vorrichtung zum selektiven Laserschmelzen von Metall. Beim selektiven Laserschmelzen wird der zu verarbeitende Werkstoff in Pulverform in einer dünnen Schicht auf einer Grundplatte aufgebracht und mittels Laserstrahlung lokal vollständig aufgeschmolzen. Beim Wiedererstarren bildet sich das entsprechende, feste Gefüge aus. Die dünnen Schichten erstarren rasch, und so kann die nächste Schicht aufgebracht werden, bis das Bauteil fertiggestellt ist. Die Daten für die Führung des Laserstrahls werden aus einem 3D-CAD-Körper mittels Software erzeugt. Der gespeicherte Datensatz kann so lange und so oft für einen Huf verwendet werden, wie sich dieser nicht verändert. Bei geringen Veränderungen ist es im Übrigen möglich, das Hufeisen auch nachzubearbeiten.

Die Software führt die Berechnungsschritte aus, um das Hufeisen in seine einzelnen Schichten zu unterteilen. Für jede Schicht werden die Vektoren erzeugt, die der Laserstrahl abfährt ("Schichtdaten"). So können hochkomplexe Strukturen wie eben auch filigrane Leichtbaustrukturen in dem erfindungsgemäßen Hufeisen erzeugt werden. Für Strukturen, die sich nicht aus der aufgenommenen Geometrie des Hufes ergeben, wie beispielsweise die Dicke des gewünschten Maß-Hufeisens, Zehenkappen, aber auch Durchtrittslöcher für Hufnägel etc. werden die entsprechenden Geometriedaten bereitgestellt und in die CAD-Software zu den 3D-Geometriedaten des Hufeisens hinzugefügt, resp. mit diesen kombiniert, bevor die Schichtdaten erzeugt werden. Diese Daten werden hierin als "Ergänzungsstruktur-Daten" bezeichnet. Das Hinzufügen kann durch eine manuelle Eingabe erfolgen, aber auch hier ist mit Hilfe einer Software ein automatisches Zufügen möglich.

Nach dem schichtweisen Fertigen des Maß-Hufeisens durch das schichtweise Aufschmelzen und erstarren Lassen des Materials erfolgt der Schritt des Entfernens von nicht aufgeschmolzenem Pulver des Metallwerkstoffes aus Kammern, die Öffnungen aufweisen, mittels Druckluft und/oder Fluid, insbesondere Wasser.

Wenn überschüssiges Pulver vom Hufeisen und/oder insbesondere aus den Kammern entfernt wurde, können weitere Schritte ausgeführt werden, wie die Wärmebehandlung des Maß-Hufeisens. Dabei wird die Homogenisierung des Materialgefüges erreicht und Spannungen werden abgebaut. Alternativ oder zusätzlich kann ein Randschicht-Härtungsvorgang erfolgen. Dieser dient dazu, die Verschleißfestigkeit des Materials zu verbessern. Dem kann auch das Aufbringen einer Beschichtung dienen, die vorteilhaft auch die Oberflächenrauhigkeit mindert und überdies hilft, Anhaftungen vom Boden zu reduzieren. Auch ein Schritt zur Glättung wird vorgeschlagen als eine Alternative zur Verminderung von Oberflächenrauhigkeit, insbesondere Polieren oder Abstrahlen, etwa Kugelstrahlen.

Das Einsetzen eines Titan- oder Stahleinsatzes in eine in dem Maß-Hufeisen vorgesehene Ausnehmung kann als letzter Schritt erfolgen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich schematische Darstellungen von Ausführungsformen der Erfindung.

Dabei zeigen:
- **Fig. 1**: eine perspektivische Aufrissansicht auf die Oberseite eines Maß-Hufeisens,
- **Fig. 2**: eine perspektivische Aufrissansicht auf die Unterseite eines Maß-Hufeisens,
- **Fig. 3**: eine perspektivische Ansicht auf die Oberseite eines Maß-Hufeisens,
- **Fig. 4**: eine perspektivische Ansicht auf die Unterseite eines Maß-Hufeisens,
- **Fig. 5**: eine Draufsicht auf eine Hufeisenunterseite,
- **Fig. 6**: eine Schnittansicht Maß-Hufeisens mit einer 3-D-Netzstruktur in ihrem Inneren.

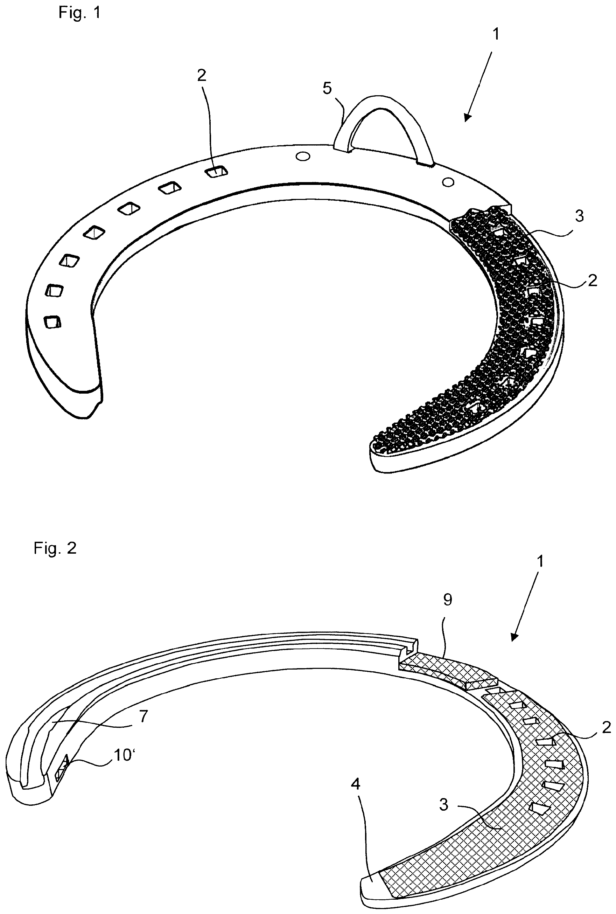

Gegenstand der Erfindung ist ein generativ gefertigtes Maß-Hufeisen, auch geometrieindividuelles Hufeisen genannt, aus einem zur generativen Fertigung geeigneten Metallwerkstoff. Das Hufeisen ist zum Aufnageln auf einen Pferdehuf vorgesehen und hat daher Hufnagellöcher, respektive Durchtrittslöcher 2 für Hufnägel, in **Fig. 1 bis 5** gezeigt.

Das Maß-Hufeisen 1, wie es in allen **Figuren 1 bis 6** gezeigt ist, hat in seinem Inneren 4 eine Leichtbaustruktur.

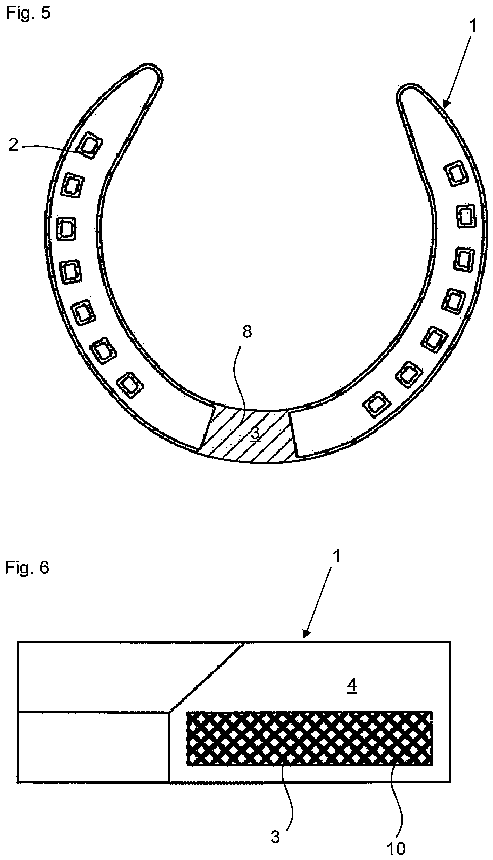

Die Leichtbaustruktur kann auf verschiedene Weise ausgebildet sein: Es kann sich beispielsweise um eine oder mehrere Kammern 10, wie beispielsweise aus **Fig. 5** und **6** deutlich wird, handeln. Diese Kammern 10 können, was figurativ jedoch nicht gezeigt ist, durch Stege oder Rippen oder Wandungen unterteilt beziehungsweise abgegrenzt sein, um den durch die Kammer gebildeten Hohlraum größere Stabilität zu verleihen.

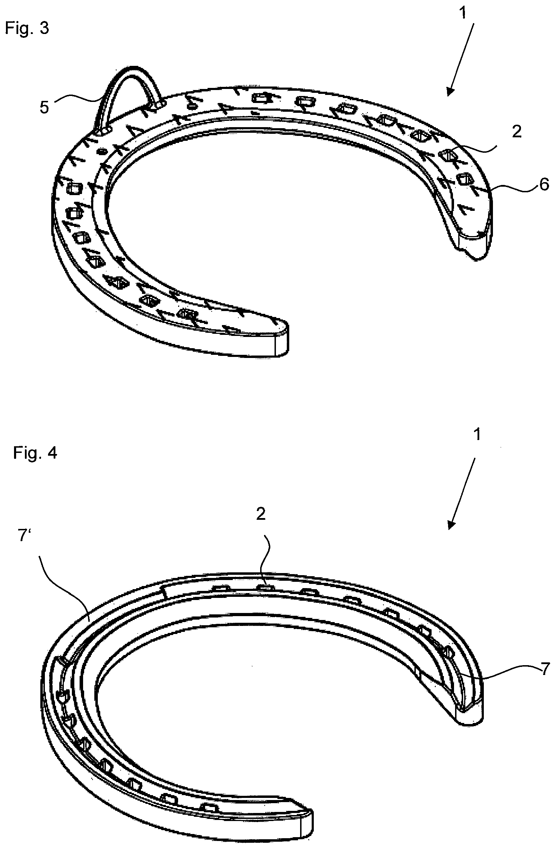

In der Kammer 10 kann alternativ, siehe **Fig. 6****,** eine dreidimensionale Struktur, dort eine wabenartige Struktur 3, vorliegen. Alternativ kann die Kammer 10, siehe **Fig. 3****,** ungefüllt sein, weil sie dann leichter ist, oder sie kann, eine weitere Alternative, mit Metallpulver des Metallwerkstoffs aus dem das Hufeisen besteht, befüllt sein.

Eine Füllung aus Metallwerkstoff ist sehr vorteilhaft, weil die pulvergefüllte Kammer besonders gut Dämpfungseigenschaften aufweist.

Auch eine waben- oder netzartige Struktur 3, wie sie in **Fig. 1,2** **und** **6** gezeigt ist, bildet Dämpfungseigenschaften aus und darüber hinaus ist sie stabilitätsfördernd. Das Hufeisen 1 ist leicht, da es nicht mehr aus dem vollen Material geschmiedet ist, sondern die beschriebenen Leichtbaustrukturen aufweist, und ist mit den gefüllten oder ungefüllten Kammern 10 dennoch stabil. Gerade bei sportlichen Anwendungen für Pferde ist es sehr vorteilhaft, wenn der Huf nicht durch Ballast wie ein schweres Hufeisen im Bewegungsablauf beeinträchtigt wird.

Es hat sich gezeigt, dass gerade die Anwendung maßgeschneiderter Hufeisen, wie es die erfindungsgemäßen sind, für die Anwendung im Rennsport sehr vorteilhaft ist. Durch die optimierte Leichtbaustruktur ist das erfindungsgemäße Hufeisen leicht und trittgedämpft und es kann darüber hinaus als orthopädisches Hufeisen ausgebildet sein. So können Fehlstellungen am Huf, aber auch am Bein, behandelt oder es kann ihnen vorgebeugt werden.

Vergleicht man eine erfindungsgemäßes Leichtbau-Maß-Hufeisen aus Aluminium, das generativ gefertigt wurde und das beschlagsfertig und individuell angepasst ist, so ergibt sich, dass das erfindungsgemäße Hufeisen für ein durchschnittliches Rennpferd bei ca. 55 Gramm liegt, wohingegen ein Vergleichshufeisen aus Aluminium, das aus Vollmaterial besteht, bei ca. 90 Gramm liegt. Insofern, als konventionelle Aluminium-Vollmaterial-Hufeisen vorgefertigt sind, müssen sie nachträglich während des Beschlagens durch den Hufschmied angepasst werden. Für das Eisen ergibt sich vorteilhaft, dass es absolut maßgefertigt und daher beschlagfertig ist und nicht geändert werden muss.

Dies ermöglicht das erfindungsgemäße Fertigungsverfahren, resp. die Prozesskette, für solche Maß-Hufeisen, die aus einem Metallwerkstoff wie beispielsweise Aluminium, Titan oder Stahl bestehen: Erfindungsgemäß wird zunächst ein 3D-Scan vom Huf des Pferdes direkt oder indirekt angefertigt und die Geometrie des Hufes wird erfasst. Die durch den 3D-Scan erfassten und aufgenommenen Daten werden gespeichert und mitsamt Ergänzungsstruktur-Daten einer CAD-Software zum Erzeugen von Schichtdaten des Maß-Hufeisens aus den 3D-Scan-Daten und den Ergänzungsstruktur-Daten zugeführt. Es erfolgt dann das Zuführen der Schichtdaten einer zum generativen Fertigen von Metallbauteilen ausgebildeten Fertigungsvorrichtung. Das Bereitstellen eines entsprechend geeigneten Metallpulvers erfolgt zeitgleich oder vor- oder nach dem Zuführen der Schichtdaten in die generative Fertigungsvorrichtung; beide Abläufe wie das Verwalten der Daten zur Herstellung des Hufeisens und das schichtweise Beschickten der Vorrichtung mit Metallpulver mit zusätzlichem Schmelzen des Metallpulvers sind getrennt voneinander handhabbar.

Das Verfahren kann besonders bevorzugt als sogenanntes SML-Verfahren (selektives Laser-Schmelzen), ausgeführt werden; entsprechend wird die Vorrichtung vom Fachmann ausgewählt.

Verfahren wie das Laser-Schmelzen, aber auch das Lasersintern sind dem Fachmann an sich sehr gut bekannt. Beide Verfahren unterscheiden sich im Wesentlichen dadurch, dass beim Lasersintern die Pulverkörner, die meist binderhaltige metallische Spezialsinterpulver sind, nur partiell aufgeschmolzen werden und ein Flüssigphasensinterprozess erfolgt, wohingegen beim selektiven Laserschmelzen binderfreie Metallpulver eingesetzt werden können, die vollständig aufgeschmolzen werden. Beide Verfahren führen bei der Herstellung des erfindungsgemäßen Hufeisens zu sehr guten Ergebnissen. Die beiden Schritte Belichten und Beschichten können vorteilhaft im Pulverbett ausgeführt werden, etwa derart, dass das Pulver vollflächig mit einer Dicke von wenigen µm auf eine Grundplatte aufgebracht und die Schichten durch entsprechendes CAD-geführtes Ansteuern des Laserstrahles entsprechend der exakten Geometrie des Hufeisens schrittweise in das Pulverbett gesintert oder eingeschmolzen werden. Die Grundplatte wird nach Erstellen einer Schicht minimal abgesenkt und es wird eine neue Schicht des Metallpulvers aufgezogen. Dass die Vorrichtung mit dem Pulver beschickt wurde, kann dabei meinen, dass das schichtauftragende Hilfsmittel wie eine Walze oder ein Rakel mit einem Metallpulver-Vorrat versehen wurde oder mit einem Reservoir gekoppelt ist.

Da der zu verarbeitende Metallwerkstoff in Pulverform Schicht für Schicht auf die Grundplatte aufgebracht und mittels Laserstrahlung lokal, quasi Punkt für Punkt, gesintert oder aufgeschmolzen wird, um nach dem Erstarren ein festes, homogenes Metallgefüge auszubilden, kann Schicht für Schicht ein Hufeisen mit einer nahezu beliebigen Geometrie angefertigt werden. Das Aufschmelzen oder Sintern des Materials mittels Laser wird durch Führung des Laserstrahls über einen 3D-CAD-Körper erzeugt.

Das Verfahren wird auch als "3D-Drucken" bezeichnet und ist für andere Bereiche der Metallwerkstoffherstellung bereits bekannt, sodass der Fachmann weiß, wie generell Daten eines dreidimensionalen Körpers aufzunehmen, zu speichern, einer entsprechenden Software zuzuführen und mittels eines entsprechenden CAD-Programmes zur Führung des Laserstrahles einzusetzen sind. Auch die Berechnungsschritte für das Bauteil, um es in einzelne Schichten zu "zerlegen" und die damit verbundene Vektorberechnung ist bekannt. Völlig unbekannt ist jedoch, durch das Abgreifen der Geometrie des Hufes Hufeisen anzufertigen und somit "Maß-Hufeisen" herzustellen.

Es können Geometrievorlagen für die Ergänzungsstrukturen wie etwa Stollen, Riefen oder Zehenkappen, aber auch Durchtrittslöcher, Widiastifte etc. im Vorfeld, also zu beliebigen Zeitpunkten vor der Erstellung der 3D-Scan-Daten erstellt werden, um diese dann mit einer entsprechenden Anpassungssoftware und weiter mit der CAD-Software mit einem sehr geringen Mehraufwand mit den 3D-Scan-Daten zu vereinigen und einen kombinierten Datensatz bereitzustellen, der es erlaubt, das generative Maß-Hufeisen mit allen Merkmalen zu fertigen.

Solange die Geometrie des Hufes sich nicht verändert, was leicht überprüfbar ist, können die gespeicherten 3D-Scan-Daten der Hufgeometrie jederzeit verwendet werden, um weitere Eisen nach dem erfindungsgemäßen Verfahren für den Huf, der gescannt wurde, zu fertigen. Es ist eine optimale Reproduzierbarkeit gegebenen.

Erfindungsgemäß ist es im Übrigen möglich, den 3D-Scan zur Erfassung der Hufgeometrie nicht unmittelbar am Pferd auszuführen, sondern den Hufabdruck durch Aufsetzen des Pferdefußes in ein Abbildungsmaterial zu generieren und damit die Hufgeometrie indirekt zu erfassen. Ein solches Abbildungsmaterial ist vorteilhaft ein Trittschaum, der hinreichend stabil ist, um die Form des Hufes beizubehalten. So kann auf leichte Weise der 3D-Scan an der Trittschaum-Hufform ausgeführt werden.

Wenn die Leichtbaustrukturen netzartige oder wabenartige Strukturen 3 sind, wie in **Fig. 6****,****1 und 2** gezeigt, so kann die Kammer 10, die die Wabenstruktur 3 enthält, von nichtaufgeschmolzenem Pulver des Metallwerkstoffes gereinigt werden, indem es durch Öffnungen 10', siehe **Fig. 2****,** die an den Kammerwänden vorliegen können, ausgetrieben wird. Hierzu kann das überschüssige Pulver des Metallwerkstoffes durch Druckluft oder Fluide, wie beispielsweise Wasser, aus der oder den Kammer(n) gespült werden. Entsprechend ist es selbstverständlich erforderlich, dass eine Kammer 10 zumindest eine Einlassöffnung 10' und eine Auslassöffnung, figurativ nicht dargestellt, aufweist.

In **Fig. 3** ist eine Kammer 10 gezeigt, die mit Pulver gefüllt werden kann (figurativ nicht dargestellt). Durch die Füllung mit Metallpulver und die Reibung der Metallpulverpartikel aneinander wird eine sehr gute dämpfende Funktion im Hufeisen erzielt.

Auch Kammern, die nur mit waben- oder netzartiger oder anderer dreidimensionaler Struktur bestückt sind, weisen eine ausgezeichnete Steifigkeit bei gleichzeitig günstigem Volumen/Gewichtsverhältnis auf und verfügen über sehr dämpfende Eigenschaften.

Um das Beschlagen zu vereinfachen und als Anschlag zu dienen oder um ein verbessertes Abrollverhalten des Hufes bereitzustellen, können die erfindungsgemäßen Maß-Hufeisen 1 mit angepasster Zehenkappe 5, siehe **Fig. 1** **und** **3****,** gefertigt werden. Alternativ können statt der Zehenkappe 5 auch Seitenkappen am Hufeisen vorliegen. Weiter ist es möglich, das Hufeisen an seiner zum Huf weisenden Oberseite mit rutschhemmenden Strukturen zum verbesserten Beschlagen auszustatten. So zeigt **Fig. 3** pfeilspitzenförmige Riefenstrukturen 6 zu diesem Zwecke. Derartige Strukturen können auch an der Hufeisenunterseite vorgesehen sein, um den Hufeisen zur besseren Griffigkeit zu verhelfen. Möglich sind Riefenstrukturen, aber auch Stollen oder Strukturen wie sie in konventionellen Eisen durch Widiastifte erzeugt werden.

Ferner ist es zur Verringerung des Gewichts des Maß-Hufeisens 1 auch möglich, den Falz 7, der die Köpfe der Hufnägel nach dem Beschlag aufnimmt und der entlang der Linie vorliegt, auf der die Durchtrittslöcher 2 für die Hufnägel verlaufen, in Bezug auf übliche Falze konventioneller Hufeisen zu verbreitern. Der in **Fig. 1** gezeigte Falz 7 hat eine Wandneigung von 45 ° und ist umlaufend an der Hufeisenunterseite angeordnet. Das in **Fig. 1** gezeigte Hufeisen 1 zeigt außerdem eine Falzverbreiterung 8, die der Optimierung der Kräfteverteilung beim Auftreten des Pferdes mit Hufeisen 1 dient.

Es ist aber auch möglich, das Hufeisen 1 an der Stelle, an der der Zehen des Pferdes abrollt, mit einer Ausnehmung 9 zu versehen, siehe **Fig. 3****,** und in diesen zur Erhöhung der Stabilität des Maß-Hufeisens 1 und zur Verbesserung der Verschleissfestigkeit und der Steifigkeit einen Stahl- oder Titaneinsatz einzusetzen (figurativ nicht dargestellt). Abgesehen von den nachträglich einbringbaren Stahl- und Titaneinsätzen können vorteilhaft die genannten Komponenten wie Zehenkappen, Seitenkappen, Leichtbaustrukturen etc. unmittelbar durch die schichtweise Fertigung des Maß-Hufeisens mittels des Selektiven-Laser-Schmelzverfahrens gefertigt werden.

Wenn es gewünscht ist, in den Kammern verbliebenes unaufgeschmolzenes Pulvermaterial auszutreiben, so kann dies auf die beschriebene Weise direkt nach den Basis-Schritten zur Fertigung des Maß-Hufeisens 1 geschehen, also vor Wärmebehandlungs-, Oberflächenbehandlungs- oder Glättungsschritten geschehen.

Andernfalls, also wenn Pulver in den Kammern verbleibt, kann das Maß-Hufeisen 1 einer Wärmebehandlung unterzogen werden, um das Gefüge zu homogenisieren und die durch das generative Fertigungsverfahren auftretenden Spannungen zu verringern. Alternativ oder zusätzlich können Randschichten des Hufeisens 1 einem Härtungsvorgang unterzogen werden. Auch dies verbessert die Verschleißfestigkeit, genauso wie die ebenfalls alternative Möglichkeit der Aufbringung einer Beschichtung. Durch Beschichten aber auch durch das ebenfalls vorgeschlagene Ausführen von Oberflächenbehandlungen wie Glätten, Polieren, Abstrahlen, können Oberflächenrauigkeiten vorteilhaft reduziert werden, um das Anhaften von Schmutz- und Bodenmaterial, das auch als Aufstollen bezeichnet wird, zu reduzieren.

## Patentansprüche

1. Generativ gefertigtes Maß-Hufeisen (1) aus einem Metallwerkstoff mit einer Mehrzahl Durchtrittslöcher (2) für Hufnägel
**dadurch gekennzeichnet, dass**
das Maß-Hufeisen (1) zumindest eine Leichtbaustruktur in seinem Inneren (4) aufweist.

2. Maß-Hufeisen (1) nach Anspruch 1,
**dadurch gekennzeichnet, dass**
die Leichtbaustruktur
- eine oder mehrere Kammer(n) (10), bevorzugt durch Stege oder Rippen oder Wandungen unterteilte oder abgegrenzte Kammer(n) und/oder
- eine oder mehrere dreidimensionale Struktur(en), bevorzugt waben- oder netzartige Struktur(en) (3),
aufweist,
wobei besonders bevorzugt die dreidimensionale(n) Struktur(en), bevorzugt waben- oder netzartige Struktur(en) (3), in der oder den Kammer(n) (10) angeordnet sind.

3. Maß-Hufeisen (1) nach Anspruch 2,
**dadurch gekennzeichnet, dass**
die Kammern (10) Öffnungen (10') aufweisen, durch die überschüssiges, bei der generativen Fertigung in den Kammern (10) verbliebenes Pulver des Metallwerkstoffs entfernbar ist.

4. Maß-Hufeisen (1) nach Anspruch 2,
**dadurch gekennzeichnet**
die Kammern (10) geschlossene Kammern (10) sind, die eine Pulverfüllung eines Pulvers des Metallwerkstoffs aufweisen.

5. Maß-Hufeisen (1) nach zumindest einem der Ansprüche 1 bis 3,
**dadurch gekennzeichnet, dass**
das Maß-Hufeisen (1)
- eine Zehenkappe (5) oder Seitenkappen aufweist und/oder
- an seiner zur Anlage an den Huf vorgesehenen Oberseite rutschhemmende Strukturen, bevorzugt Riefenstrukturen, besonders bevorzugt pfeilspitzenförmige Riefenstrukturen (6) aufweist,
- an seiner zum Auftreten auf den Boden vorgesehenen Unterseite Griffigkeit verbessernde Strukturen, bevorzugt Riefenstrukturen, besonders bevorzugt pfeilförmige Riefenstrukturen, oder Stollen oder widiastift-förmige Stifte,
oder entlang einer Linie, auf der die Durchtrittslöcher (2) für Hufnägel verlaufen, einen durchgängigen oder unterbrochenen Falz (7), bevorzugt mit Falzverbreiterung (8) in der Mitte des Maß-Hufeisens (1) zur Aufnahme der Hufnagelköpfe aufweist.

6. Maß-Hufeisen (1) nach zumindest einem der Ansprüche 1 bis 5,
**dadurch gekennzeichnet, dass**
das Maß-Hufeisen (1) aus Aluminium, Stahl oder Titan besteht.

7. Maß-Hufeisen (1) nach zumindest einem der Ansprüche 1 bis 5,
**dadurch gekennzeichnet, dass**
das Maß-Hufeisen (1) zumindest an seinem zur Anlage unter den Zehen vorgesehenen Abschnitt eine Ausnehmung (9) aufweist, in die ein Stahl- oder Titaneinsatz einsetzbar ist.

8. Generatives Fertigungsverfahren für Maß-Hufeisen (1) aus einem Metallwerkstoff mit einer Mehrzahl Durchtrittslöcher (2) für Hufnägel nach zumindest einem der Ansprüche 1 bis 7,
**umfassend die Schritte**
- Ausführen eines 3D-Scans und Erfassen der Geometrie des Hufes und Speichern der aufgenommenen 3D-Scan-Daten,
- Zuführen der 3D-Scan-Daten und Zuführen von Ergänzungsstruktur-Daten einer CAD-Software zum Erzeugen von Schichtdaten des Maß-Hufeisens (1) aus den 3D-Scan-Daten und den Ergänzungsstruktur-Daten, dann
- Zuführen der Schichtdaten einer zum generativen Fertigen von Metallbauteilen ausgebildeten Fertigungsvorrichtung, und
- Bereitstellen eines Metallpulvers, und
- schichtweise Fertigen des Maß-Hufeisens (1).

9. Generatives Fertigungsverfahren nach Anspruch 8
**umfassend den Schritt**
- vor dem Ausführen des 3D-Scans und dem Erfassen der Geometrie des Hufes Aufnehmen eines Hufabdrucks in ein Abbildungsmaterial, bevorzugt einem Trittschaum, und Ausführen des 3D-Scans an dem in dem Abbildungsmaterial vorliegenden Hufabdruck, und/oder
- Erzeugen von Ergänzungsstrukturdaten unabhängig von dem Ausführen des 3D-Scans, aber vor dem Erzeugen der Schichtdaten.

10. Generatives Fertigungsverfahren nach Anspruch 8 oder 9,
wobei die Fertigungsvorrichtung eine Vorrichtung zum Laserschmelzen von Metall ist, bevorzugt eine Vorrichtung zum selektiven Laserschmelzen (SLM).

11. Generatives Fertigungsverfahren nach zumindest einem der Ansprüche 8 bis 10,
**umfassend den Schritt**
- nach dem schichtweisen Fertigen des Maß-Hufeisens (1) Entfernen von nicht aufgeschmolzenem Pulver des Metallwerkstoffes aus Kammern (10), die Öffnungen aufweisen, mittels Druckluft und/oder Fluid, insbesondere Wasser.

12. Generatives Fertigungsverfahren nach zumindest einem der Ansprüche 8 bis 11,
**umfassend zumindest einen der Schritte**
- nach dem schichtweisen Fertigen des Maß-Hufeisens (1) Unterziehen des Maß-Hufeisens (1) einer Wärmebehandlung, und/oder
- Einsetzen eines Titan- oder Stahleinsatzes in eine in dem Maß-Hufeisen (1) vorgesehene Ausnehmung (9), und/oder
- Ausführen eines Randschicht-Härtungsvorgangs, und/oder
- Aufbringen einer Beschichtung, und/oder
- Ausführen einer Oberflächenbehandlung, bevorzugt Glätten von Oberflächenrauhigkeit, insbesondere Polieren oder Abstrahlen.

## Claims

1. A generatively produced custom horseshoe (1) made of a metal material having a plurality of through-holes (2) for horseshoe nails,
**characterised in that**
the custom horseshoe (1) has at least one lightweight structure in its interior (4).

2. The custom horseshoe (1) according to claim 1,
**characterised in that**
the lightweight structure has
- one or a plurality of chamber(s), chamber(s), which is/are preferably divided or limited by webs or ribs or walls, and/or
- one or a plurality of three-dimensional structure(s), preferably honeycomb-like or net-like structure(s) (3),
wherein particularly preferably the three-dimensional structure(s), preferably honeycomb-like or net-like structure(s) (3), are arranged in the chamber or chambers (10).

3. The custom horseshoe (1) according to claim 2,
**characterised in that**
the chambers (10) have openings (10'), through which excess powder of the metal material, which remained in the chambers (10) in response to the generative production, can be removed.

4. The custom horseshoe (1) according to claim 2,
**characterised in that**
the chambers (10) are closed chambers (10), which have a powder filling of a powder of the metal material.

5. The custom horseshoe (1) according to at least any one of claims 1 to 3,
**characterised in that**
the custom horseshoe (1)
- has a toe cap (5) or side caps and/or
- has slip-resistant structures, preferably groove structures, particularly preferably arrow tip-shaped groove structures (6), on its upper side, which is provided for abutting against the hoof,
- structures improving grip, preferably groove structures, particularly preferably arrow-shaped groove structures, or studs or widia pin-shaped pins, on its lower side, which is provided for stepping on the ground,
or a continuous or interrupted fold (7), preferably having fold expansion (8) in the middle of the custom horseshoe (1) for receiving the horseshoe nail heads, along a line, on which the through-holes (2) for horseshoe nails run.

6. The custom horseshoe (1) according to at least any one of claims 1 to 5,
**characterised in that**
the custom horseshoe (1) consists of aluminium, steel or titanium.

7. The custom horseshoe (1) according to at least any one of claims 1 to 5,
**characterised in that**
the custom horseshoe (1) has a recess (9), into which a steel or titanium insert can be inserted, at least on its section, which is provided for abutment under the toes.

8. A generative production method for custom horseshoes (1) made of a metal material having a plurality of through-holes (2) for horseshoe nails according to at least any one of claims 1 to 7,
**comprising the steps of**
- carrying out a 3D scan and capturing the geometry of the hoof and storing the recorded 3D scan data,
- supplying the 3D scan data and supplying supplementary structure data of a CAD software in order to generate layer data of the custom horseshoe (1) from the 3D scan data and the supplementary structure data, then
- supplying the layer data to a production device configured for the generative production of metal components, and
- providing a metal powder, and
- producing the custom horseshoe (1) in layers.

9. The generative production method according to claim 8,
**comprising the step of**
- prior to carrying out the 3D scan and capturing the geometry of the hoof, recording a hoof print in an reproduction material, preferably a foot impression foam, and carrying out the 3D scan using the hoof print, which is present in the reproduction material,
and/or
- generating supplementary structure data independently of carrying out the 3D scan, but prior to generating the layer data

10. The generative production method according to claim 8 or 9,
wherein the production device is a device for laser melting metal, preferably a device for selective laser melting (SLM).

11. The generative production method according to at least any one of claims 8 to 10, **comprising the step of**
- removing unmelted powder of the metal material from chambers (10), which have openings, by means of compressed air and/or fluid, in particular water, after the production of the custom horseshoe (1) in layers.

12. The generative production method according to at least any one of claims 8 to 11, **comprising at least one of the steps of**
- subjecting the custom horseshoe (1) to a heat treatment after the production of the custom horseshoe (1) in layers, and/or
- inserting a titanium or steel insert into a recess (9) provided in the custom horseshoe (1), and/or
- carrying out an edge layer hardening process, and/or
- applying a coating, and/or
- carrying out a surface treatment, preferably smoothing of surface roughness, in particular polishing or blasting.

## Revendications

1. Fer à cheval sur mesure (1) fabriqué de manière additive en un matériau métallique avec une pluralité d'orifices de passage (2) pour des clous de sabot,
**caractérisé en ce que**
le fer à cheval sur mesure (1) présente au moins une structure légère dans son intérieur (4).

2. Fer à cheval sur mesure (1) selon la revendication 1,
**caractérisé en ce que**
la structure légère présente
- une ou plusieurs chambre(s) (10), de préférence chambre(s) divisée(s) ou limitée(s) par des entretoises ou nervures ou parois et/ou
- une ou plusieurs structure(s) tridimensionelle(s), de préférence structure(s) en nid d'abeilles ou réticulée(s) (3),
dans lequel la/les structure(s) tridimensionelle(s), de préférence structure(s) en nid d'abeilles ou réticulée(s) (3), sont de manière particulièrement préférée disposée(s) dans la ou les chambre(s) (10).

3. Fer à cheval sur mesure (1) selon la revendication 2,
**caractérisé en ce que**
les chambres (10) présentent des ouvertures (10') à travers lesquelles la poudre du matériau métallique en excès, restant dans les chambres (10) lors de la fabrication additive peut être éliminée.

4. Fer à cheval sur mesure (1) selon la revendication 2,
**caractérisé en ce que**
les chambres (10) sont des chambres fermées (10) qui présentent un remplissage de poudre d'une poudre du matériau métallique.

5. Fer à cheval sur mesure (1) selon au moins une des revendications 1 à 3, **caractérisé en ce que**
le fer à cheval sur mesure (1)
- présente un capuchon d'orteils (5) ou des capuchons latéraux et/ou
- présente sur son côté supérieur prévu pour l'appui sur le sabot des structures antidérapantes, de préférence des structures rainurées, de manière particulièrement préférée des structures rainurées (6) en forme de pointe de flèche,
- présente sur son côté inférieur prévu pour la marche sur le sol des structures améliorant l'adhérence, de préférence des structures rainurées, de manière particulièrement préférée des structures rainurées en forme de flèche, ou des crampons ou pointes en forme de pointe Widia,
ou le long d'une ligne sur laquelle les orifices de passage (2) pour des clous de sabot s'étendent, un pli (7) continu ou interrompu, de préférence avec un élargissement de pli (8) au milieu du fer à cheval sur mesure (1) pour la réception des têtes de clou de sabot.

6. Fer à cheval sur mesure (1) selon au moins une des revendications 1 à 5,
**caractérisé en ce que**
le fer à cheval sur mesure (1) se compose d'aluminium, d'acier ou de titane.

7. Fer à cheval sur mesure (1) selon au moins une des revendications 1 à 5,
**caractérisé en ce que**
le fer à cheval sur mesure (1) présente au moins sur sa section prévue pour l'appui sous les orteils un évidement (9) dans lequel un insert en acier ou titane peut être inséré.

8. Procédé de fabrication additive pour des fers à cheval sur mesure (1) en un matériau métallique avec une pluralité d'orifices de passage (2) pour des clous de sabot selon au moins une des revendications 1 à 7,
**comprenant les étapes de**
- réalisation d'un balayage 3D et détection de la géométrie du sabot et mémorisation des données de balayage 3D enregistrées,
- amenée des données de balayage 3D et amenée de données de structure complémentaire à un logiciel de CAO pour la génération de données de couche du fer à cheval sur mesure (1) à partir des données de balayage 3D et des données de structure complémentaire, puis
- amenée des données de couche à un dispositif de fabrication réalisé pour la fabrication additive de composants métalliques, et
- mise à disposition d'une poudre métallique, et
- fabrication par couches du fer à cheval sur mesure (1).

9. Procédé de fabrication additive selon la revendication 8,
**comprenant l'étape de**
- avant la réalisation du balayage 3D et la détection de la géométrie du sabot, enregistrement d'une empreinte de sabot dans un matériau de reproduction, de préférence une mousse d'empreinte, et réalisation du balayage 3D sur l'empreinte de sabot présente dans le matériau de reproduction, et/ou
- génération de données de structure complémentaire indépendamment de la réalisation du balayage 3D mais avant la génération des données de couche.

10. Procédé de fabrication additive selon la revendication 8 ou 9,
dans lequel le dispositif de fabrication est un dispositif pour la fusion par laser de métal, de préférence un dispositif pour la fusion sélective par laser (FSL).

11. Procédé de fabrication additive selon au moins une des revendications 8 à 10,
**comprenant l'étape de**
- après la fabrication par couches du fer à cheval sur mesure (1), élimination de la poudre non fondue du matériau métallique de chambres (10) qui présentent des ouvertures au moyen d'air comprimé et/ou de fluide, notamment d'eau.

12. Procédé de fabrication additive selon au moins une des revendications 8 à 11,
**comprenant au moins une des étapes de**
- après la fabrication par couches du fer à cheval sur mesure (1), soumission du fer à cheval sur mesure (1) à un traitement thermique, et/ou
- insertion d'un insert en titane ou acier dans un évidement (9) prévu dans le fer à cheval sur mesure (1), et/ou
- réalisation d'un processus de durcissement de couche marginale, et/ou
- application d'un revêtement, et/ou
- réalisation d'un traitement superficiel, de préférence lissage de rugosité superficielle, notamment polissage ou sablage.
